# EUROPEAN PATENT SPECIFICATION

(11) **EP 4 583 811 B1**
(45) Date of publication and mention of the grant of the patent: **28.10.2026**
(21) Application number: 23768005.3
(22) Date of filing: 04.09.2023
(51) Int. Cl.: A61C 7/08, A61C 7/36

(54) **DENTAL ALIGNER AND ALIGNMENT SYSTEM**
ZAHNKORREKTURSCHIENE UND ZAHNKORREKTURSYSTEM
ALIGNEUR DENTAIRE ET SYSTÈME D'ALIGNEMENT

(30) Priority: 05.09.2022 IT 202200018096
(43) Date of publication of application: 16.07.2025
(73) Proprietor: Biosaf In S.R.L., 20060 Trezzano Rosa (MI) (IT)
(72) Inventor: GASTALDI, Giorgio, 25123 BRESCIA (IT); NAGNI, Matteo, 60129 ANCONA (IT)
(74) Representative: Cutropia, Gianluigi
(86) International application number: PCT/IB2023/058721
(87) International publication number: WO 2024/052788

(56) References cited:
- KR-B1- 102 328 653
- US-A1- 2013 089 828
- US-A1- 2014 072 926
- US-A1- 2019 125 497
- US-A1- 2019 282 333
- US-A1- 2019 343 603

## Description

The present invention relates to a dental aligner and to a relevant dental alignment system.

Dental aligners are custom removable medical devices that provide an aesthetic, comfortable and hygienic alternative to conventional orthodontic braces.

Dental aligners allow for dental displacement in a sequential and pre-programmed manner by means of devices made of plastic material applied to the teeth in such a way as to constantly and gradually release light forces on the dento-alveolar system of the elements involved in the displacement.

Dental aligners have been present in the orthodontic sector for more than two decades; they are considered orthodontic therapeutic aids and are among the devices with the widest range of use, being comparable to conventional multi-bracket therapies.

The first dental aligners arose from the need to address aesthetic and practical issues in adult patients who were looking for a tooth alignment solution that did not involve placing brackets on the anterior teeth or having to undergo lingual orthodontic treatments that are uncomfortable and very complex to manage.

A dental aligner is a plastic shell made according to the patient's mouth, in which a set up with a desired tooth displacement is made. The use of dental aligners was limited to the alignment of the anterior sectors and did not involve the use of aids. As the demand for dental aligners has increased, the number of case histories and studies of aligner-related mechanics has also increased.

Currently, dental aligners are made by thermoforming a transparent plastic material, usually PET-G, onto dental arch models that sequentially reproduce a programmed tooth displacement. The adherence to the tooth displacement progression is critical for therapeutic purposes, which is why both dental arch models and dental aligners correctly and indelibly display a coding (usually a numerical one) of the planned progression of the tooth displacement.

The last generation of dental aligners can be used with therapy aids, such as intraoral elastics. In such a case, prior to applying the dental aligner, the dentist will make two notches in the dental aligner so as to generate a distal hook for anchoring the intraoral elastic with directionality from mesial to distal (from the front towards the posterior portion of the mouth). Inevitably, such notches have sharp edges that generate weakening points and do not allow for an equal distribution of a reaction force to the pulling of the elastic on the dental aligner.

Therefore, to date, the attempt to directly use the dental aligners as support for the intraoral elastic has proven ineffective due to the inherent mechanical characteristics of the plastic material (PET-G) of the dental aligners. In fact, over a short period of time, the notches in the dental aligner that are necessary for anchoring the intraoral elastic will become fracture lines, thus making the mechanics of the dental aligner ineffective and the dental alignment system unsafe.

In order to solve such a problem, there has been a change in the approach, anchoring the intraoral elastic to bollards or anchorage buttons attached directly to the patient's teeth by means of adhesive bonding techniques.

In such a case, the dental aligner must have a loop or slot to allow the anchorage bollard to pass through. However, the anchorage bollard presses on the finishing line of the dental aligner. As a result, also this solution has proven to be ineffective, because the contact of the anchorage bollard with the finishing line of the dental aligner frequently causes patient discomfort and periodontal tissue irritation problems. In addition, since the anchorage bollards are clearly visible, such a solution defeats one of the main reasons why the patient prefers the dental aligner, i.e. the aesthetic reason.

US2018078342A1 describes a dental aligner. US2019274788A1 describes the use of an intraoral elastic anchored by means of anchorage bollards attached to the teeth.

US2021153977A1 illustrates a dental aligner provided with holes through which anchorage bollards are passed to anchor an intraoral elastic.

US2013089828A1 describes a tooth alignment system comprising a dental aligner having seats suitable for accommodating the teeth of a dental arch, a bollard attached to a tooth of the arch opposite that in which the dental aligner is arranged, and an annular elastic attached to the dental aligner and to the bollard.

The elastic is attached to the dental aligner in an attachment portion of the dental aligner comprising a slot, a saddle and a ridge. The slot has a bottom, an anterior flank, and a posterior flank that connects the bottom of the slot to the ridge. The posterior flank of the slot has a concave C-shape such that the ridge substantially has a hook shape. The hook of the ridge has a length taken along a medial-distal direction lower than 1/3 of the length of the tooth. Since a tooth has a length of approximately 10 mm, the ridge must have a length less than or equal to 3 mm. So US2013089828A1 describes a thin hook-shaped ridge. Such a thin hook-shaped ridge is fragile and inadequate to allow for an equal distribution of the reaction force to the pulling of the annular elastic on the dental aligner, and furthermore such a ridge is particularly prone to fracture and breakage. So the alignment system described in US2013089828A1 is not reliable.

US2014072926A1 describes a dental aligner with pearl white surfaces for improved aesthetics.

US2019343603A1 describes a method and a system for optimizing the design of dental aligners.

US2019343603A1 describes an orthodontic positioning system comprising an upper aligner intended to accommodate a patient's upper dental arch, a lower aligner intended to accommodate a patient's lower dental arch, and one or two elastic elements attached to hooks of the upper dental aligner and of the lower dental aligner. The hooks are hook-shaped and are frequently subject to fracture and breakage due to the pulling force of the elastic.

US2019125497A1 describes a dental system comprising an upper appliance and/or a lower appliance. The upper and/or lower braces consist of trays having a U-shape and having slots designed to accommodate the teeth of the patient's upper and/or lower arch. Complex anchorage means to which elastic bands can be attached may be fixed to said trays. The system described in US2019125497A1 is expensive and involves the design of complex systems for anchoring the elastic element.

US2014/072926 discloses an orthodontic remodeling device comprising an aligner with lingual, occlusal and facial surfaces and shaped to intimately contact a plurality of teeth in an arch so as to apply a sufficient pressure to at least one tooth in said arch to move said at least one tooth; wherein at least the facial surfaces of said aligner are a pearlescent white having a refractive index of at least 1.5 under visible light and wet conditions.

US2019/282333 discloses a method for designing an orthodontic aligner shape for moving at least one tooth of a patient according to a treatment plan; the method comprising the following steps:
- receiving a first position of the at least one tooth at a first treatment stage of the patient;
- determining a movement vector for moving the at least one tooth;
- identifying surfaces with desirable orientations of the at least one tooth of the patient based on the determined movement vector;
- determining that the identified surfaces with desirable orientations are insufficient for the movement vector to impart a determined force system;
- contouring a model of the tooth surface to improve an amount of surface with desirable orientations for the determined force system; and
- designing the orthodontic aligner shape based on the contoured model of the tooth surface.

US2019/343603 discloses a method of designing an orthodontic positioning appliance, the method comprising the following steps:
- receiving a digital representation of a patient's teeth;
- displaying a three-dimensional model of the patient's teeth, the three dimensional model being based on the digital representation of the patient's teeth;
- determining a position of an elastic member; and
- defining an edge of a hook for an orthodontic aligner relative to the displayed three-dimensional model of the patient's teeth and based on the position of the elastic member.

US2019/125497 discloses a system for correcting malocclusions of a patient comprising:
- a maxillary appliance having tooth receiving cavities shaped to receive teeth of the maxilla and a first coupling a first distance above an occlusal plane of the patient for receiving an elastic;
- a mandibular appliance having tooth receiving cavities shaped to receive teeth of the mandible; and
- a corrective appliance having a first mount shaped to engage with the mandibular arch of the patient and having a second coupling shaped to receive the elastic.

KR102328653 discloses an orthodontics system to increase accuracy of orthodontics. Said orthodontics system comprises a triangular pyramid-shaped orthodontic attachment and a composite aligner.

The purpose of the present invention is to eliminate the drawbacks of the prior art by providing a dental aligner and a dental alignment system that are efficient, effective, reliable, and have little aesthetic impact.

These purposes are achieved in accordance with the invention with the features of the appended independent claim 1.

Advantageous achievements of the invention appear from the dependent claims.

The dental aligner according to the invention is defined by claim 1.

The dental aligner system according to the invention provides for a combined application of the dental aligner and of an intraoral elastic, wherein the dental aligner is designed to avoid breaking during the application of teeth displacement forces due to the pulling of the intraoral elastic.

The order of magnitude of the forces applied to a dental aligner and generated by 13/16-inch (20.65 mm) intraoral elastics is in the range of 200-250 g (2-2.5 N), depending on the elongation of the elastic (200-300 mm).

The control and anchorage systems, which generate the constraining reactions of the dental aligner, determine the desired displacement of the dental elements.

The control systems include optimized attachments for root position control. The anchorage systems include stabilization attachments.

The shape of the control and anchorage systems results in a constraining reaction on the dental aligner that opposes the pulling force of the intraoral elastics. The direction of such a constraining reaction force must therefore be as equal as possible to the pulling force of the elastic, within the limits imposed by the anatomy and the geometry of the dental aligner.

For the application of the intraoral elastic (intramaxillary or intermaxillary elastic), the distal hook concept commonly adopted in the dental aligners of the prior art has been modified.

In fact, each intraoral elastic is applied on the dental aligner that is designed with a special geometry to allow for anchoring the intraoral elastic. For such a purpose, the geometry of an anterior portion of the dental aligner, which is known as "slot" and is necessary to attach the intraoral elastic, has been especially studied, and more importantly, a new geometry of a posterior portion of the dental aligner, which is known as "saddle", has been devised to allow for a better seating of the intraoral elastic and a better distribution of the forces applied by the intraoral elastic on the dental aligner.

The slot used for accommodating the elastic should not have sharp corners, as they are stress concentration points that might compromise the structural strength of the dental aligner.

A ridge is provided between the slot and the saddle. The length of the ridge, i.e. the distance between the slot and the saddle, must be such as to ensure the adequate strength of the dental aligner structure.

The geometric shape of the saddle allows the pulling direction of the intraoral elastic to be oriented with the direction of the constraining reactions imposed on the dental aligner by the anchorage systems.

Further features of the invention will become clearer from the detailed description that follows, referring to a purely illustrative and therefore non-limiting embodiment, illustrated in the attached drawings, wherein:
Fig. 1 is a top view of a dental aligner according to the invention;
Fig. 2 is a bottom view of the dental aligner of Fig. 1;
Fig. 3 is a rendering side view illustrating a right portion of the dental aligner according to the invention;
Fig. 4 is a side view of a detail of Fig. 3;
Fig. 5 is a view as Fig. 3, illustrating a portion of partially interrupted intraoral elastic applied to the right portion of the dental aligner;

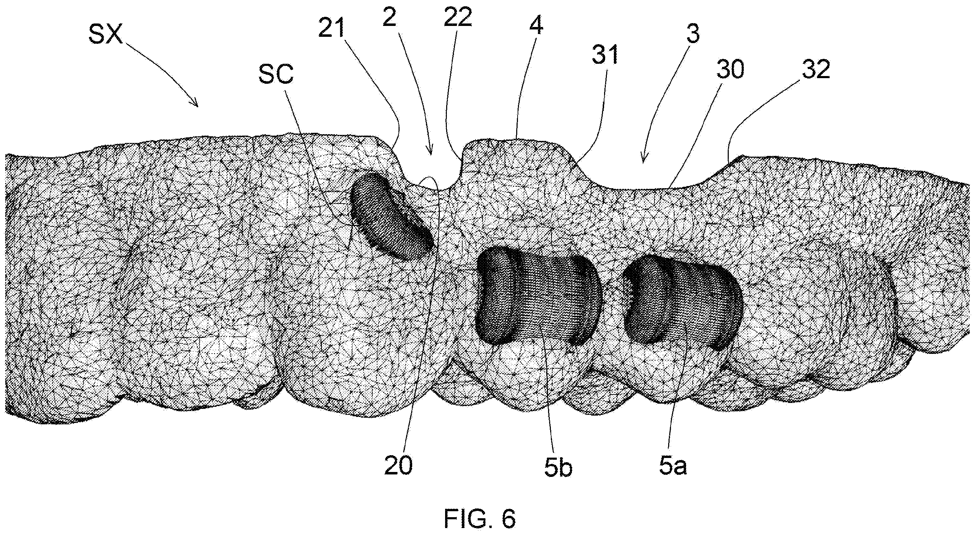

Fig. 6 is a rendering side view, illustrating a left portion of the dental aligner according to the invention;
Fig. 7 is a view as Fig. 6, illustrating a portion of partially interrupted intraoral elastic, applied to the left portion of the dental aligner;
Fig. 8 is a side view illustrating a right portion of dental arch in which the dental aligner according to the invention, an intraoral elastic and an anchorage bollard are applied;
Fig. 9 is a side view of a right portion of the dental aligner with a partially interrupted intraoral elastic, illustrating a pulling force of the elastic and a constraining reaction force on the dental aligner; and
Fig. 10 is an axonometric view of the dental aligner showing internal pockets for attachments.

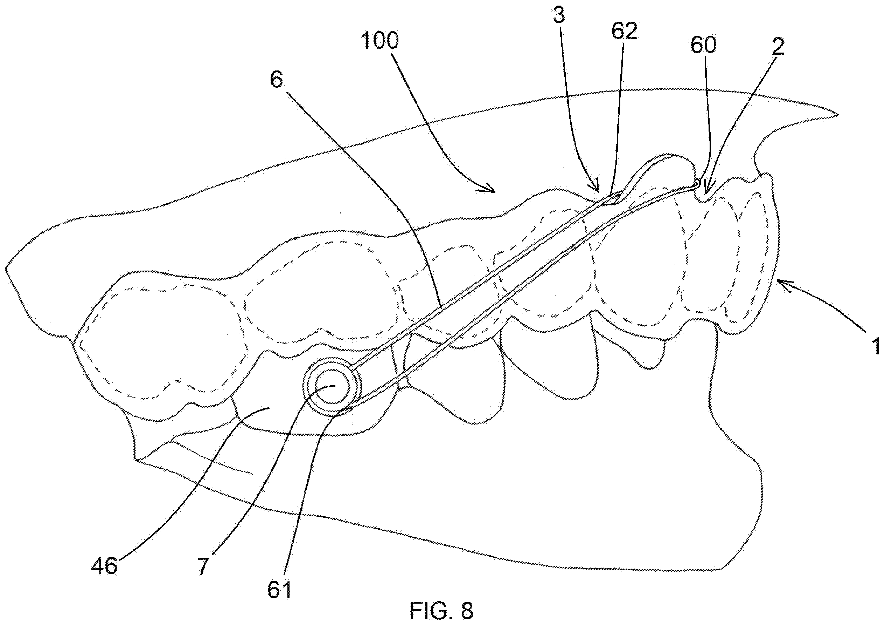

With the aid of the Figures, the dental alignment system according to the invention, which is illustrated in Fig. 8 and is comprehensively indicated with the reference numeral 100, is described.

The dental alignment system (100) comprises a dental aligner (1).

Although specific reference will be made below to a dental aligner suitable for being applied to an upper dental arch, the invention also extends to a dental aligner suitable for being applied to a lower dental arch.

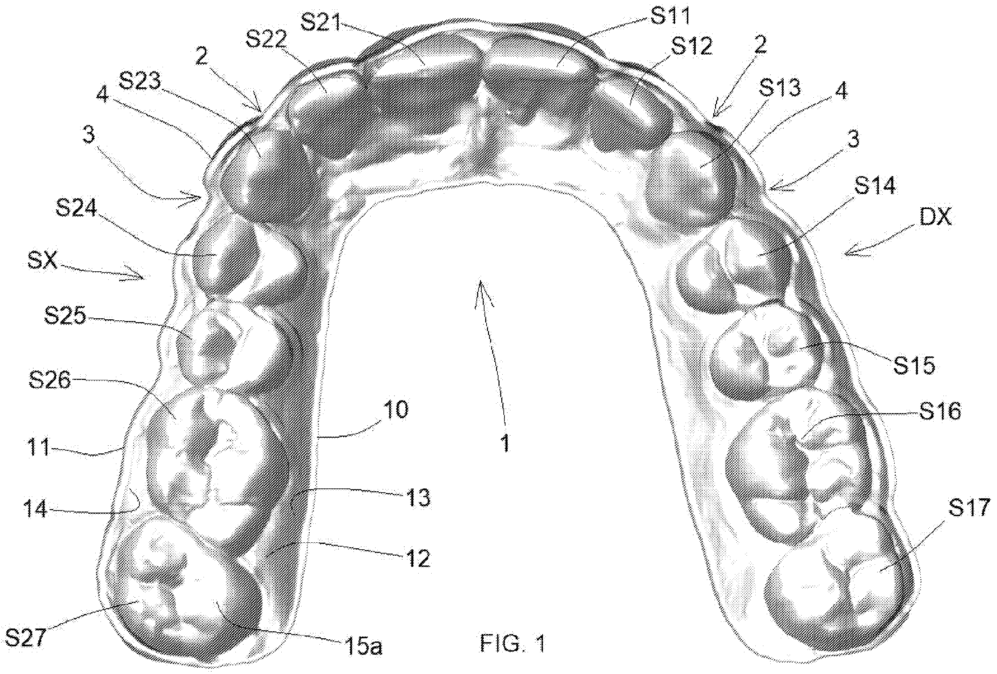

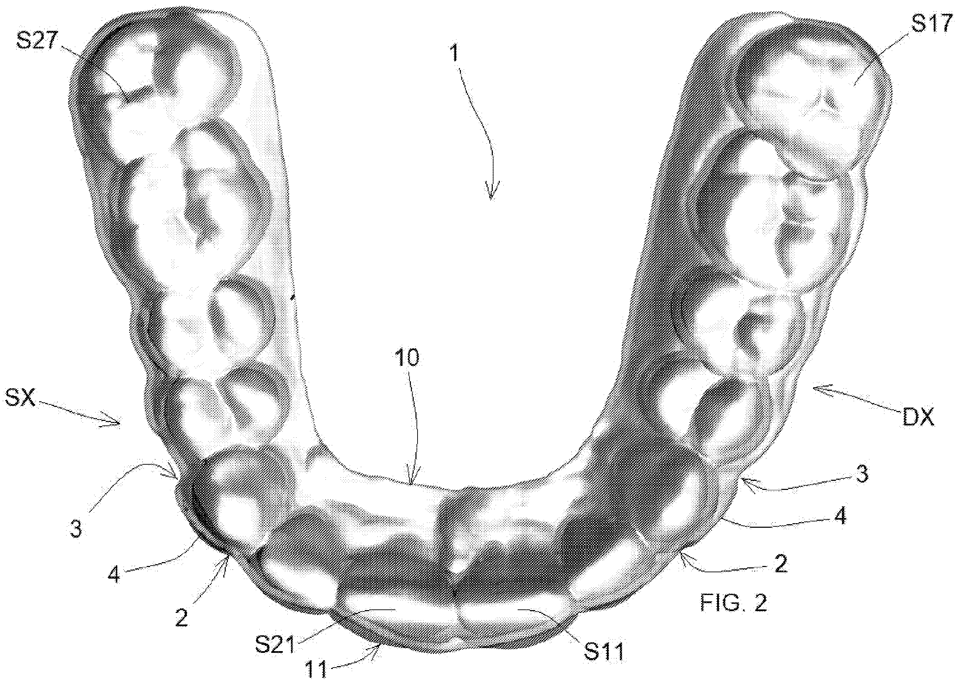

Referring to Figs. 1 and 2, the dental aligner (1) is suitable for being applied to an upper dental arch. Therefore, the dental aligner (1) has a U- shape with an inner edge (10) and an outer edge (11). The outer edge (11) is referred to as the "cut line" and is designed at a design stage of the dental aligner.

The dental aligner (1) has a U-shaped cross-section with a bottom wall (12) arranged between an inner lateral wall (13), which can be defined as "palatal wall", and an outer lateral wall (14), which can be defined as "vestibular wall", ending in the inner and outer edges (10, 11), respectively.

The dental aligner (1) comprises a right portion (Dx) suitable for being disposed on the right upper dental semi-arch and a left portion (Sx) suitable for being disposed on the left upper dental semi-arch.

The right portion (Dx) comprises seats (S11 - S17) suitable for accommodating all the teeth of the right dental semi-arch. By way of example, in Figs. 1 and 2, seven seats (S11 - S17) suitable for accommodating the teeth numbered 11 to 17 of the right dental semi-arch, respectively, are shown.

The left portion (Sx) comprises seats (S21 - S27) suitable for accommodating all the teeth of the left dental semi-arch. By way of example, in Figs. 1 and 2, seven seats suitable for accommodating the teeth numbered 21 to 27 of the left dental semi-arch, respectively, are shown.

A slot (2), a saddle (3) and a ridge (4) are provided in the outer edge (11) of the right and left portions of the dental aligner, said ridge (4) being arranged between the slot (2) and the saddle (3).

The slot (2) of the right portion (Dx) is arranged between the seat (S12) of the right second incisor and the seat (S13) of the right canine. The saddle (3) of the right portion (Dx) is arranged between the seat (S13) of the right canine and the seat (S14) of the right first premolar. The ridge (4) is disposed between the slot (2) and the saddle (3) of the right portion (Dx) at the seat (S13) of the right canine.

The slot (2), the saddle (3) and the ridge (4) of the left portion (Sx) are identical and arranged symmetrically with respect to the slot (2), the saddle (3) and the ridge (4) of the right portion (Dx). Thus, the slot (2) of the left portion (Sx) is arranged between the seat (S22) of the left second incisor and the seat (S23) of the left canine. The saddle (3) of the left portion (Sx) is arranged between the seat (S23) of the left canine and the seat (S24) of the left first premolar. The ridge (4) is disposed between the slot (2) and the saddle (3) of the left portion (Sx) at the seat (S23) of the left canine.

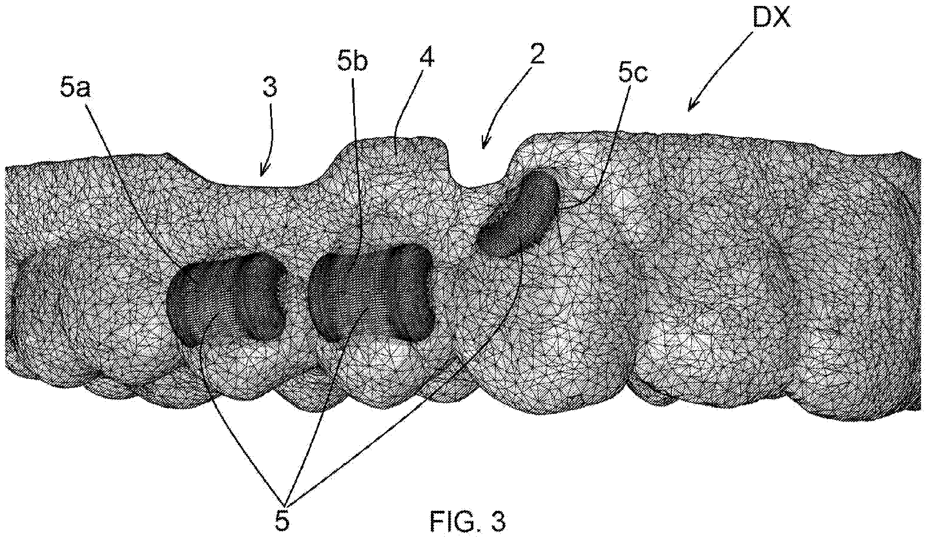

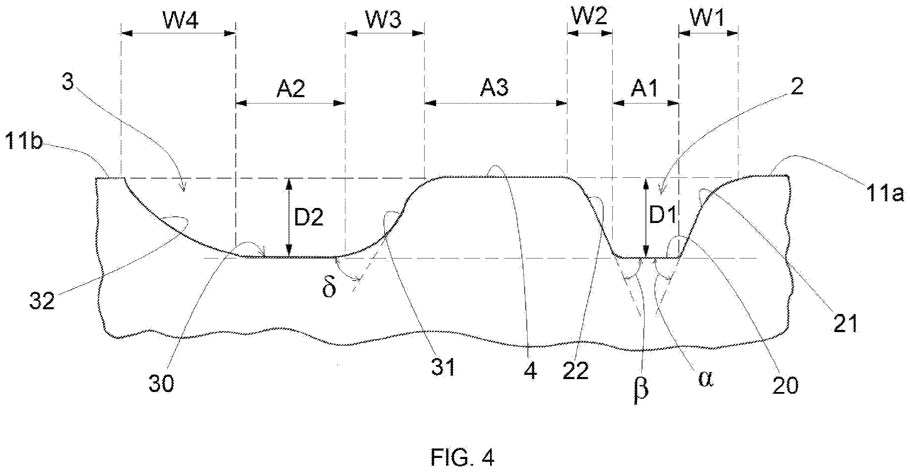

With reference to Figs. 3 and 4, the geometric shapes of the slot (2), of the saddle (3) and of the ridge (4) of the right portion (Dx) of the dental aligner are described, it being understood that the geometric shapes of the slot (2), of the saddle (3) and of the ridge (4) of the left portion (Sx) of the dental aligner are identical to those of the slot (2), of the saddle (3) and of the ridge (4) of the right portion (Dx) of the dental aligner.

The slot (2) in side view comprises:
- a bottom (20),
- an anterior flank (21) that connects the bottom (20) to an anterior portion (11a) of the outer edge (11), and
- a posterior flank (22) that connects the bottom (20) to the ridge (4).

The slot (2) has a length (A1) intended as the length of the bottom (20) taken along a mesial-distal direction.

The slot (2) has a depth (D1) intended as the distance between the bottom (20) and a straight line passing through the ridge (4).

The anterior flank (21) and the posterior flank (22) of the slot have an involute shape.

The anterior flank (21) has a length (W1). A line tangent to the point of inflection of the anterior flank (21) is inclined by an acute angle (α) of approximately 60 °- 80° with respect to the bottom (20).

The posterior flank (22) has a length (W2). A line tangent to the point of the inflection of the posterior flank (22) is inclined by an acute angle (β) of approximately 60 °- 80° with respect to the bottom (20). The inclination angle (β) of the posterior flank is essentially equal to the inclination angle (α) of the anterior flank. Thus the length (W2) of the posterior flank is essentially equal to the length (W1) of the anterior flank.

The saddle (3) in side view comprises:
- a bottom (30),
- an anterior flank (31) that connects the bottom (30) to the ridge (4), and
- a posterior flank (32) that connects the bottom (30) to a rear portion (11b) of the outer edge (11).

The saddle (3) has a length (A2) intended as the length of the bottom (30) of the saddle taken along a mesial-distal direction. The length (A2) of the saddle is greater than the length (A1) of the slot. The length (A2) of the saddle is approximately twice the length (A1) of the slot.

The saddle (3) has a depth (D2) intended as the distance between the bottom (30) of the saddle and a straight line passing through the ridge (4). The depth (D2) of the saddle is less than the depth (D1) of the slot. The depth (D2) of the saddle is approximately 2/3 of the depth (D1) of the slot.

The anterior flank (31) of the saddle has an involute shape. The anterior flank (31) of the saddle has a length (W3). A line tangent to the point of inflection of the anterior flank (31) of the saddle is inclined by an angle (δ) of approximately 40°-60° with respect to the bottom (30) of the saddle. The length (W3) of the anterior flank (31) of the saddle is greater than the length of the posterior flank (W2) of the slot. The length (W3) of the anterior flank (31) of the saddle is approximately 1.5-2 times the length of the posterior flank (W2) of the slot.

The posterior flank (32) of the saddle has a concave shape like an arc of a circle or a parabola portion. The posterior flank (32) of the saddle has a length (W4) greater than the length (W2) of the posterior flank of the slot. The length of the posterior flank (32) of the saddle is approximately 2-3 times the length (W2) of the posterior flank of the slot.

The ridge (4) has a length (A3) greater than 5 mm, preferably comprised between 5 and 8 mm taken along a mesial-distal direction. The length (A3) of the ridge is greater than the length (A1) of the slot and essentially equal to the length (A2) of the saddle.

Referring to Fig. 3, the right portion (Dx) and the left portion (Sx) of the dental aligner (1) comprise pockets (5) suitable for accommodating attachments. The attachments are bodies made of a composite material that are placed on specific teeth to exert a certain amount of pressure at a specific time. For this purpose, the attachments can have a different shape, such as a cylindrical, oval, capsule, parallelepiped, spherical, truncated, beveled shape, etc.

The function of the attachments is to ensure a better fit of the dental aligner and to ensure that the forces produced by the dental aligner on the teeth effectively and efficiently cause the desired movement of the teeth. Stabilization attachments can be used to ensure the stability of the dental aligner, and optimization attachments can be used to optimize the forces applied by the dental aligner to individual teeth.

The attachments are made of composite material having the same color as the patient's teeth to maintain high esthetic features of the dental aligners, which are transparent. At the end of the treatment, the attachments will be removed completely, without causing any problems to the tooth.

The pockets (5) comprise outer pockets (5a, 5b, 5c) and inner pockets (5d, 5e) for stabilization attachments.

The outer pockets (5a, 5b, 5c) are arranged on the outer wall (14) of the dental aligner (1), whereas the inner pockets (5d, 5e) are arranged on the inner wall (13) of the dental aligner (1).

Referring to Figs. 1, 2 and 10, the inner pockets (5d, 5e) comprise a first inner pocket (5d) and a second inner pocket (5e) in the shape of a pyramid having an isosceles triangle as its base. The first inner pocket (5d) and the second inner pocket (5e) are positioned at the seat (S14; S24) that accommodates the first premolar and at the seat (S15; S25) that accommodates the second premolar, respectively.

Referring to Figg. 3, the outer pockets (5a, 5b, 5c) comprise a first outer pocket (5a) arranged at the saddle (3) (under the saddle (3)) and a second outer pocket (5b) arranged at the ridge (4) (under the ridge (4)). Depending on the needs of the individual case, the outer pockets (5a, 5b, 5c) may also comprise a third outer pocket (5c) arranged at the slot (2) (under the slot (2)).

The Figures show a dental aligner with pockets (5) that comprise both inner pockets (5d, 5e) and outer pockets (5a, 5b, 5c). However, the pockets (5) of the dental aligner may comprise only the inner pockets (5d, 5e).

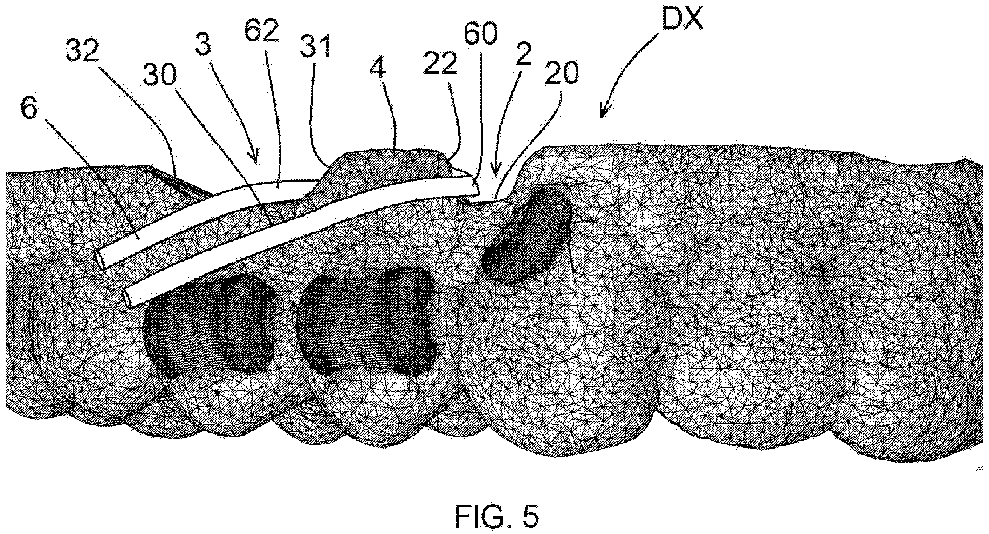

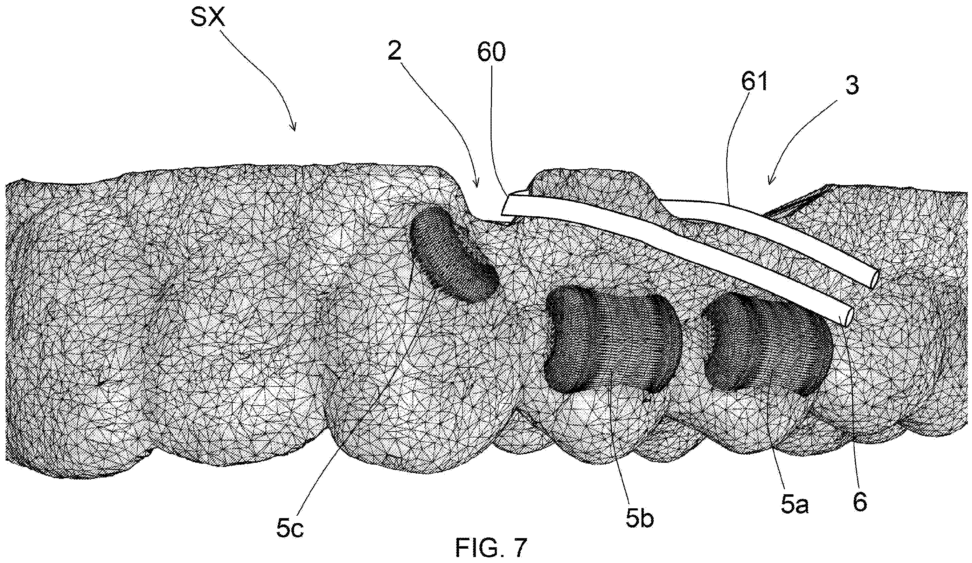

With reference to Figs. 5, 7 and 8, the dental aligner system (100) comprises two intraoral elastics (6) anchored to the dental aligner (1) and to respective anchor bollards (7) attached to the first molar (tooth number 46) of the right lower arch and to the first molar (tooth number 36) of the left lower arch, respectively.

Each intraoral elastic (6) has an annular shape and comprises a first end portion (60) with a curved U-shape inside the slot (2), around the posterior flank (22) of the slot, and a second end portion (61) with a curved U-shape around the anchorage bollard (7).

A rectilinear portion (62) of the intraoral elastic passes over the saddle (3), going in contact with the bottom (30) of the saddle, without touching or pressing against the sides of the saddle.

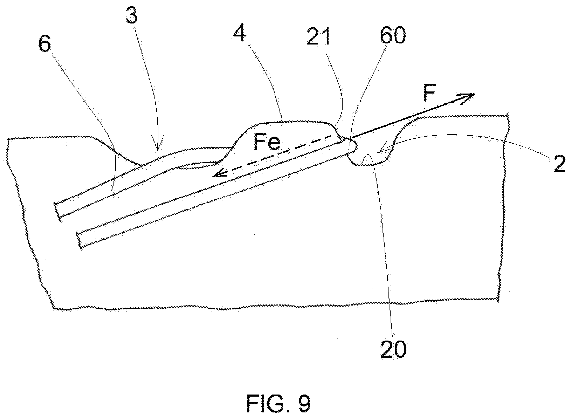

With reference to Fig. 9, the first end portion (60) of the intraoral elastic pushes the posterior flank (21) of the slot with a force (Fe) equal to the pulling force exerted by the elastic. Hence, the posterior flank (21) of the slot (2) is designed to resist the pulling force (Fe) of the elastic with a constraining reaction force (F) of opposite direction to the pulling force of the elastic.

In addition, although not shown in the attached figures, the dental aligner system (100) comprises attachments positioned on the teeth and suitable for being inserted inside the pockets (5).

For the fabrication of the dental aligner (1), during a digital design stage, the components of the constraining reaction forces (F) exerted on the posterior flanks (21) of the two slots (2) of the dental aligner must be calculated. Based on these data, the slots (2), the saddles (3) and the ridges (4) are designed.

Then it is necessary to consider which attachments to use and what type of pockets (5) to make on the dental aligner in order to accommodate the attachments.

After completing the case study and the programming of the mechanics, the process continues with a rapid prototyping phase of sequential upper and/or lower dental arch models based on the desired tooth displacement. The dental arch models are used as dies in a thermoforming mold to produce the dental aligners (1).

Finally, the dental aligners (1) are finished on the inner and outer edges (10, 11), following a cut line obtained in the initial design phase, including the finishing of the slot (2), of the saddle (3) and of the ridge (4).

Such finishing is performed with micromotors and cutters used to finish thermally molded products. For finishing the cut line of the dental aligner (1), cutters with tungsten carbon or CrCo steel with cross-cutting are used. For smoothing and polishing the dental aligner (1), silicone-based discs are used to achieve beveled and polished surfaces, precisely following the contour of the dental aligner.

The dental aligner and the system according to the invention have several advantages over the dental aligners of the prior art.

Firstly, the length (A3) of the ridge (4), which is greater than 5 mm, has been appropriately selected in order to have a more reliable and stronger ridge (4) than the ridges described in the prior art, such as the hooked ridge described in US2013089828A1.

In addition, the involute shape of the posterior flank (22) of the slot (2), which joins with the ridge (4), allows for balancing the forces generated by the pulling of the intraoral elastic (6), preventing the breakage of the ridge or avoiding the breakage of the intraoral elastic (6). So the ridge (4) is even more robust and reliable than the one described in US2013089828A1, which has a substantially C-shaped posterior flank that defines a hook shape of the ridge with a stress concentration point that generates an overstress on the ridge.

In particular, the applicant has discovered that the particular shape of the posterior flank (22) of the slot (2) allows for an optimal stress distribution without generating any stress concentration points. The particular shape of the posterior flank (22) of the slot (2) provides that the flank of the slot has an involute shape with a line tangent to the point of inflection that defines an acute angle (β) of approximately 60°-80° with the bottom (20) of the slot.

In addition, the provision of the inner pockets (5d, 5e) of the dental aligner makes it possible to reduce or even nullify the number of outer pockets (5a, 5b, 5c), which could create a hindrance to the intraoral elastic (6) by interfering with the pulling trajectory of the stretched intraoral elastic (6). Moreover, during mandibular movements, the outer pockets (5a, 5b, 5c) could also intercept the intraoral elastic (6), displacing it and varying its tension accordingly.

Equivalent variations and modifications may be made to the present embodiment of the invention, within the reach of a person skilled in the art, which nevertheless fall within the scope of the invention as expressed by the appended claims.

## Claims

1. Dental aligner (1) suitable for being positioned on an upper and/or lower dental arch; said dental aligner (1) having a U-shape with an inner edge (10) and an outer edge (11); wherein said dental aligner (1) has a U-shaped cross section and comprises a bottom wall (12), an inner side wall (13) and an outer side wall (14) that terminate in the inner and outer edges (10, 11) of the dental aligner, respectively;
said dental aligner (1) comprising:
- a right portion (Dx) suitable for being positioned on the right dental semi-arch and a left portion (Sx) suitable for being positioned on the left dental semi-arch; the right portion (Dx) comprising seats (S11 - S17) suitable for accommodating teeth of the right dental semi-arch; the left portion (Sx) comprising seats (S21 - S27) suitable for accommodating teeth of the left dental semi-arch;
- two slots (2) in said outer edge (11), namely a slot (2) in the right portion (Dx) and another slot (2) in the left portion (Sx), respectively,
- two saddles (3) in said outer edge (11), namely a saddle (3) in the right portion (Dx) and another saddle (3) in the left portion (Sx), respectively and
- two ridges (4) in said outer edge (11), namely a ridge (4) in the right portion (Dx) and another ridge (4) in the left portion (Sx), respectively, wherein each ridge (4) is arranged between a slot (2) and a saddle (3);
wherein each slot (2) is suitable for accommodating a first U-shaped end portion (60) of an intraoral elastic (6), and each saddle (3) is suitable for allowing the passage of a rectilinear section (62) of the intraoral elastic; and
said slot (2) in side view comprises:
- a bottom (20),
- an anterior flank (21) connecting the bottom (20) to an anterior portion (11a) of the outer edge (11), and
- a posterior flank (22) connecting the bottom (20) to the ridge (4);
**characterized by** the fact that
the ridge (4) has a length (A3) taken along a mesial-distal direction that is greater than 5 mm; and
the posterior flank (22) of the slot (2) has an involute shape with a point of inflection and has a line tangent to the point of inflection and inclined to the bottom (20) of the slot by an acute angle (β);
wherein the line tangent to the point of inflection of the posterior flank (22) of the slot is inclined with respect to the bottom (20) of the slot by an angle (β) of 60°-80°.

2. The dental aligner (1) according to claim 1, wherein the length (A3) of the ridge (4) is comprised between 5 and 8 mm.

3. The dental aligner (1) according to claim 1 or 2, wherein the slot (2) of the right portion (Dx) is arranged between a seat (S12) of the dental aligner accommodating the right second incisor and a seat (S13) of the dental aligner accommodating the right canine;
the saddle (3) of the right portion (Dx) is arranged between the seat (S13) of the dental aligner accommodating the right canine and a seat (S14) of the dental aligner accommodating the right first premolar;
the ridge (4) of the right portion (Dx) is arranged at the seat (S13) of the dental aligner accommodating the right canine;
the slot (2) of the left portion (Sx) is arranged between a seat (S22) of the dental aligner accommodating the left second incisor and a seat (S23) of the dental aligner accommodating the left canine;
the saddle (3) of the left portion (Sx) is arranged between the seat (S23) of the dental aligner accommodating the left canine and a seat (S24) of the dental aligner accommodating the left first premolar; and
the ridge (4) of the left portion (Sx) is arranged at the seat (S23) of the dental aligner accommodating the left canine.

4. The dental aligner (1) according to any one of the preceding claims, wherein said saddle (3) in side view comprises:
- a bottom (30),
- an anterior flank (31) connecting the bottom (30) to the ridge (4), and
- a posterior flank (32) connecting the bottom (30) to a rear portion (11b) of the outer edge (11).

5. The dental aligner (1) according to claim 4, wherein the anterior flank (31) of the saddle has an involute shape; a line tangent to the point of inflection of the anterior flank (31) of the saddle is inclined by an angle (δ) of approximately 40°-60° with respect to the bottom (30) of the saddle.

6. The dental aligner (1) according to claim 4 or 5, wherein the posterior flank (32) of the saddle has a concave shape like an arc of a circle or portion of a parabola.

7. The dental aligner (1) according to any one of the preceding claims, wherein each one of the right (Dx) and left portion (Sx)s of the dental aligner (1) comprises pockets (5) suitable for accommodating attachments.

8. The dental aligner (1) according to claim 7, wherein said pockets (5) comprise inner pockets (5d, 5e) arranged on the inner wall (13) of the dental aligner (1).

9. The dental aligner (1) according to claim 8, wherein said inner pockets (5d, 5e) comprise a first inner pocket (5d) and a second inner pocket (5e) positioned at the seat (S14; S24) accommodating the first premolar and at the seat (S15; S25) accommodating the second premolar, respectively.

10. The dental aligner (1) according to claim 8 or 9, wherein said inner pockets (5d, 5e) have a pyramid shape with an isosceles triangle base.

11. The dental aligner (1) according to any one of claims 7 to 10, wherein said pockets (5) comprise outer pockets (5a, 5b, 5c) arranged on the outer wall (14).

12. The dental aligner (1) according to claim 11, wherein said outer pockets (5a, 5b, 5c) comprise a first outer pocket (5a) disposed at the saddle (3) and a second outer pocket (5b) disposed at the ridge (4).

13. Dental alignment system (100) comprising:
- a dental aligner (1) according to any one of the preceding claims;
- two anchorage bollards (7) suitable for being attached to the first molar of the right dental arch and to the first molar of the left dental arch, respectively,
- two intraoral elastics (6), wherein each intraoral elastic has a first U-shaped end portion (60) suitable for being placed in a slot (2) of the dental aligner, around the ridge (4), a second U-shaped end portion (61) suitable for being placed around the anchor bollard (7), and a rectilinear section (62) passing over the saddle (3) of the dental aligner.

14. The dental alignment system (100) comprising:
- a dental aligner (1) according to any one of claims 10 to 15;
- two anchorage bollards (7) suitable for being attached to the first molar of the right dental arch and to the first molar of the left dental arch, respectively,
- two intraoral elastics (6), wherein each intraoral elastic has a first U-shaped end portion (60) suitable for being placed in a slot (2) of the dental aligner, around the ridge (4), a second U-shaped end portion (61) suitable for being placed around the anchorage bollard (7) and a rectilinear section (62) passing over the saddle (3) of the dental aligner;
- attachments suitable for being placed on the teeth and inserted inside the pockets (5).

## Patentansprüche

1. Zahn-Aligner (1), der dazu geeignet ist, auf einem oberen und/oder unteren Zahnbogen angeordnet zu werden; wobei der Zahn-Aligner (1) eine U-Form mit einer Innenkante (10) und einer Außenkante (11) aufweist; wobei der Zahn-Aligner (1) einen U-förmigen Querschnitt aufweist und eine Bodenwand (12), eine innere Seitenwand (13) und eine äußere Seitenwand (14) umfasst, die in der Innenkante bzw. der Außenkante (10, 11) des Zahn-Aligners enden;
wobei der Zahn-Aligner (1) Folgendes umfasst:
- einen rechten Abschnitt (Dx), der dazu geeignet ist, auf dem rechten Zahnhalbbogen angeordnet zu werden, und einen linken Abschnitt (Sx), der dazu geeignet ist, auf dem linken Zahnhalbbogen angeordnet zu werden; wobei der rechte Abschnitt (Dx) Sitze (S11 - S17) umfasst, die der dazu geeignet sind, Zähne des rechten Zahnhalbbogens aufzunehmen; wobei der linke Abschnitt (Sx) Sitze (S21 - S27) umfasst, die dazu geeignet sind, Zähne des linken Zahnhalbbogens aufzunehmen;
- zwei Schlitze (2) in der Außenkante (11), jeweils einen Schlitz (2) im rechten Abschnitt (Dx) und einen weiteren Schlitz (2) im linken Abschnitt (Sx),
- zwei Vertiefungen (3) in der Außenkante (11), jeweils eine Vertiefung (3) im rechten Abschnitt (Dx) und eine weitere Vertiefung (3) im linken Abschnitt (Sx), und
- zwei Kämme (4) in der Außenkante (11), jeweils einen Kamm (4) im rechten Abschnitt (Dx) und einen weiteren Kamm (4) im linken Abschnitt (Sx), wobei jeder Kamm (4) zwischen einem Schlitz (2) und einer Vertiefung (3) angeordnet ist;
wobei jeder Schlitz (2) dazu bestimmt ist, einen ersten U-förmigen Endabschnitt (60) eines intraoralen Gummibandes (6) aufzunehmen, und jede Vertiefung (3) dazu bestimmt ist, den Durchgang eines geradlinigen Abschnitts (62) des intraoralen Gummibandes zu erlauben; und
der Schlitz (2) in der Seitenansicht Folgendes umfasst:
- einen Boden (20),
- eine Vorderseite (21), die den Boden (20) mit einem vorderen Abschnitt (11a) der Außenkante (11) verbindet, und
- eine Rückseite (22), die den Boden (20) mit dem Kamm (4) verbindet;
**dadurch gekennzeichnet, dass**
der Kamm (4) eine Länge (A3) aufweist, die, in mesial-distaler Richtung gemessen, mehr als 5 mm beträgt; und
die Rückseite (22) des Schlitzes (2) die Form einer Evolvente mit einem Wendepunkt aufweist und eine Linie aufweist, die den Wendepunkt tangiert und zum Boden (20) des Schlitzes um einen spitzen Winkel (β) geneigt ist;
wobei die Linie, die den Wendepunkt der Rückseite (22) des Schlitzes tangiert, zum Boden (20) des Schlitzes um einen Winkel (β) von 60° bis 80°geneigt ist.

2. Zahn-Aligner (1) nach Anspruch 1, wobei die Länge (A3) des Kamms (4) zwischen 5 und 8 mm beträgt.

3. Zahn-Aligner (1) nach Anspruch 1 oder 2, wobei der Schlitz (2) des rechten Abschnitts (Dx) zwischen einem Sitz (S12) des Zahn-Aligners, der den rechten seitlichen Schneidezahn aufnimmt, und einem Sitz (A13) des Zahn-Aligners, der den rechten Eckzahn aufnimmt, angeordnet ist;
der Sattel (3) des rechten Abschnitts (Dx) ist zwischen dem Sitz (S13) des Zahn-Aligners, der den rechten Eckzahn aufnimmt, und einem Sitz (A14) des Zahn-Aligners, der den rechten ersten Prämolar aufnimmt, angeordnet;
der Kamm (4) des rechten Abschnitts (Dx) ist in Übereinstimmung mit dem Sitz (S13) des Zahn-Aligners angeordnet, der den rechten Eckzahn aufnimmt;
der Schlitz (2) des linken Abschnitts (Dx) ist zwischen einem Sitz (S22) des Zahn-Aligners, der den linken seitlichen Schneidezahn aufnimmt, und einem Sitz (A23) des Zahn-Aligners, der den linken Eckzahn aufnimmt, angeordnet;
der Sattel (3) des linken Abschnitts (Dx) ist zwischen dem Sitz (S23) des Zahn-Aligners, der den linken Eckzahn aufnimmt, und einem Sitz (S24) des Zahn-Aligners, der den linken ersten Prämolar aufnimmt, angeordnet; und
der Kamm (4) des linken Abschnitts (Sx) ist in Übereinstimmung mit dem Sitz (S23) des Zahn-Aligners angeordnet, der den linken Eckzahn aufnimmt.

4. Zahn-Aligner (1) nach einem der vorstehenden Ansprüche, wobei der Sattel (3) in der Seitenansicht Folgendes umfasst:
- einen Boden (30),
- eine Vorderseite (31), die den Boden (30) mit dem Kamm (4) verbindet, und
- eine Rückseite (32), die den Boden (30) mit einem hinteren Abschnitt (11b) der Außenkante (11) verbindet.

5. Zahn-Aligner (1) nach Anspruch 4, wobei die Vorderseite (31) des Sattels die Form einer Evolvente aufweist; eine Linie, die den Wendepunkt der Vorderseite (31) des Sattels tangiert, ist zum Boden (30) des Sattels um einen Winkel (δ) von ungefähr 40° bis 60° geneigt.

6. Zahn-Aligner (1) nach Anspruch 4 oder 5, wobei die Rückseite (32) des Sattels eine konkave Form wie ein Kreisbogen oder ein Abschnitt einer Parabel aufweist.

7. Zahn-Aligner (1) nach einem der vorstehenden Ansprüche, wobei jeder rechte Abschnitt (Dx) und jeder linke Abschnitt (Sx) des Zahn-Aligners (1) Taschen (5) umfasst, die dazu geeignet sind, Befestigungen aufzunehmen.

8. Zahn-Aligner (1) nach Anspruch 7, wobei die Taschen (5) Innentaschen (5d, 5e) umfassen, die auf der Innenwand (13) des Zahn-Aligners (1) angeordnet sind.

9. Zahn-Aligner (1) nach Anspruch 8, wobei die Innentaschen (5d, 5e) eine erste Innentasche (5d) und eine zweite Innentasche (5e) umfassen, die jeweils in Übereinstimmung mit dem Sitz (S14; S24), der den ersten Prämolar aufnimmt, und dem Sitz (S15; S25), der den zweiten Prämolar aufnimmt, angeordnet sind.

10. Zahn-Aligner (1) nach Anspruch 8 oder 9, wobei die Innentaschen (5d, 5e) die Form einer Pyramide mit der Grundfläche eines gleichschenkligen Dreiecks aufweisen.

11. Zahn-Aligner (1) nach einem der Ansprüche 7 bis 10, wobei die Taschen (5) Außentaschen (5a, 5b, 5c) umfassen, die auf der Außenwand (14) angeordnet sind.

12. Zahn-Aligner (1) nach Anspruch 11, wobei die Außentaschen (5a, 5b, 5c) eine erste Außentasche (5a), die in Übereinstimmung mit dem Sattel (3) angeordnet ist, und eine zweite Außentasche (5b) umfassen, die in Übereinstimmung mit dem Kamm (4) angeordnet ist.

13. Zahn-Alignment-System (100) umfassend:
- einen Zahn-Aligner (1) nach einem der vorstehenden Ansprüche;
- zwei Verankerungspfosten (7), die dazu geeignet sind, jeweils an dem ersten Molar des rechten Zahnbogens und an dem ersten Molar des linken Zahnbogens befestigt zu werden,
- zwei intraorale Gummibänder (6), wobei jedes intraorale Gummiband einen ersten U-förmigen Endabschnitt (60) aufweist, der dazu geeignet ist, in einem Schlitz (2) des Zahn-Aligners, um den Kamm (4) herum, angeordnet zu werden, einen zweiten U-förmigen Endabschnitt (61) aufweist, der dazu geeignet ist, um den Verankerungspfosten (7) herum angeordnet zu werden, und einen geradlinigen Abschnitt (62) aufweist, der über den Sattel (3) des Zahn-Aligners geht.

14. Zahn-Alignment-System (100) umfassend:
- einen Zahn-Aligner (1) nach einem der Ansprüche 10 bis 15;
- zwei Verankerungspfosten (7), die dazu geeignet sind, jeweils an dem ersten Molar des rechten Zahnbogens und an dem ersten Molar des linken Zahnbogens befestigt zu werden,
- zwei intraorale Gummibänder (6), wobei jedes intraorale Gummiband einen ersten U-förmigen Endabschnitt (60) aufweist, der dazu geeignet ist, in einem Schlitz (2) des Zahn-Aligners, um den Kamm (4) herum, angeordnet zu werden, einen zweiten U-förmigen Endabschnitt (61) aufweist, der dazu geeignet ist, um den Verankerungspfosten (7) herum angeordnet zu werden, und einen geradlinigen Abschnitt (62) aufweist, der über den Sattel (3) des Zahn-Aligners geht;
- Befestigungen, die dazu geeignet sind, auf den Zähnen angebracht zu werden und in die Taschen (5) eingefügt zu werden.

## Revendications

1. Aligneur dentaire (1) destiné à être positionné sur une arcade dentaire supérieure et/ou inférieure ; ledit aligneur dentaire (1) ayant la forme d'un « U » en plan avec un bord interne (10) et un bord externe (11) ; où ledit aligneur dentaire (1) a une forme en « U » en section transversale et comprend une paroi de fond (12), une paroi latérale interne (13) et une paroi latérale externe (14) qui terminent respectivement dans les bords interne et externe (10, 11) de l'aligneur dentaire ;
ledit aligneur dentaire (1) comprenant :
- une portion droite (Dx) destinée à être positionnée sur la semi-arcade dentaire droite et une portion gauche (Sx) destinée à être positionnée sur la semi-arcade dentaire gauche ; la portion droite (Dx) comprenant des emplacements (S11 - S17) destinés à accueillir des dents de la semi-arcade dentaire droite ; la portion gauche (Sx) comprenant des emplacements (S21 - S27) destinés à accueillir des dents de la semi-arcade dentaire gauche ;
- deux concavités (2) dans ledit bord externe (11), respectivement une concavité (2) dans la portion droite (Dx) et une autre concavité (2) dans la portion gauche (Sx),
- deux selles (3) dans ledit bord externe (11), respectivement une selle (3) dans la portion droite (Dx) et une autre selle (3) dans la portion gauche (Sx), et
- deux crêtes (4) dans ledit bord externe (11), respectivement une crête (4) dans la portion droite (Dx) et une autre crête (4) dans la portion gauche (Sx), où chaque crête (4) est disposée entre une concavité (2) et une selle (3) ;
où chaque concavité (2) est apte à accueillir une première portion d'extrémité (60), en forme de « U », d'un élastique intra-oral (6), et chaque selle (3) est apte à consentir le passage d'un segment (62) de forme rectiligne de l'élastique intra-oral ; et
ladite concavité (2), vue de profil, comprend :
- un fond (20),
- un flanc antérieur (21) qui relie le fond (20) à une portion antérieure (11a) du bord externe (11), et
- un flanc postérieur (22) qui relie le fond (20) à la crête (4) ;
**caractérisé en ce que**
la crête (4) a une longueur (A3), prise le long d'une direction mésiale-distale, majeure de 5 mm ; et
le flanc postérieur (22) de la concavité (2) a la forme d'une développante avec un point d'inflexion et a une ligne tangente au point d'inflexion inclinée par rapport au fond (20) de la concavité d'un angle (β) aigu ;
où la ligne tangente au point d'inflexion du flanc postérieur (22) de la concavité est inclinée par rapport au fond (20) de la concavité d'un angle (β) de 60°-80°.

2. Aligneur dentaire (1) selon la revendication 1, où la longueur (A3) de la crête (4) est comprise entre 5 et 8 mm.

3. Aligneur dentaire (1) selon la revendication 1 ou 2, où la concavité (2) de la portion droite (Dx) est disposée entre un emplacement (S12) de l'aligneur dentaire qui accueille la seconde incisive droite et un emplacement (S13) de l'aligneur dentaire qui accueille la canine droite ;
la selle (3) de la portion droite (Dx) est disposée entre l'emplacement (S13) de l'aligneur dentaire qui accueille la canine droite et un emplacement (S14) de l'aligneur dentaire qui accueille la première prémolaire droite ;
la crête (4) de la portion droite (Dx) est disposée en correspondance de l'emplacement (S13) de l'aligneur dentaire qui accueille la canine droite ;
la concavité (2) de la portion gauche (Sx) est disposée entre un emplacement (S22) de l'aligneur dentaire qui accueille la seconde incisive gauche et un emplacement (S23) de l'aligneur dentaire qui accueille la canine gauche ;
la selle (3) de la portion gauche (Sx) est disposée entre l'emplacement (S23) de l'aligneur dentaire qui accueille la canine gauche et en emplacement (S24) de l'aligneur dentaire qui accueille la première prémolaire gauche ; et
la crête (4) de la portion gauche (Sx) est disposée en correspondance de l'emplacement (S23) de l'aligneur dentaire qui accueille la canine gauche.

4. Aligneur dentaire (1) selon l'une quelconque des revendications précédentes, où ladite selle (3), vue de profil, comprend :
- un fond (30),
- un flanc antérieur (31) qui relie le fond (30) à la crête (4), et
- un flanc postérieur (32) qui relie le fond (30) à une portion postérieure (11b) du bord externe (11).

5. Aligneur dentaire (1) selon la revendication 4, où le flanc antérieur (31) de la selle a la forme d'une développante ; une ligne tangente au point d'inflexion du flanc antérieur (31) de la selle a une inclinaison, par rapport au fond (30) de la selle, d'un angle (δ) d'environ 40°- 60°.

6. Aligneur dentaire (1) selon la revendication 4 ou 5, où le flanc postérieur (32) de la selle a une forme concave en arc de cercle ou portion d'une parabole.

7. Aligneur dentaire (1) selon l'une quelconque des revendications précédentes, où chaque portion droite (Dx) et gauche (Sx) de l'aligneur dentaire (1) comprend des poches (5) aptes à accueillir des fixations.

8. Aligneur dentaire (1) selon la revendication 7, où lesdites poches (5) comprennent des poches internes (5d, 5e) disposées sur la paroi interne (13) de l'aligneur dentaire (1).

9. Aligneur dentaire (1) selon la revendication 8, où lesdites poches internes (5d, 5e) comprennent une première poche interne (5d) et une seconde poche interne (5e) positionnées respectivement en correspondance de l'emplacement (S14; S24) qui accueille la première prémolaire et dans l'emplacement (S15; S25) qui accueille la seconde prémolaire.

10. Aligneur dentaire (1) selon la revendication 8 ou 9, où lesdites poches internes (5d, 5e) ont la forme d'une pyramide avec base à triangle isocèle.

11. Aligneur dentaire (1) selon l'une quelconque des revendications de 7 à 10, où lesdites poches (5) comprennent des poches externes (5a, 5b, 5c) disposées sur la paroi externe (14).

12. Aligneur dentaire (1) selon la revendication 11, où lesdites poches externes (5a, 5b, 5c) comprennent une première poche externe (5a) disposée en correspondance de la selle (3) et une seconde poche externe (5b) disposée en correspondance de la crête (4).

13. Système d'alignement dentaire (100) comprenant :
- un aligneur dentaire (1) selon l'une quelconque des revendications précédentes ;
- deux crochets de fixation (7) destinés à être fixés respectivement sur la première molaire de l'arcade dentaire droite et sur la première molaire de l'arcade dentaire gauche,
- deux élastiques intra-oraux (6), où chaque élastique intra-oral a une première portion d'extrémité (60) en forme de « U » destinée à être disposée dans une concavité (2) de l'aligneur dentaire, autour de la crête (4), une seconde extrémité (61) en forme de « U » destinée à être disposée autour du crochet de fixation (7) et un segment (62), de forme rectiligne, qui passe sur la selle (3) de l'aligneur dentaire.

14. Système d'alignement dentaire (100) comprenant :
- un aligneur dentaire (1) selon l'une quelconque des revendications de 10 à 15 ;
- deux crochets de fixation (7) destinés à être fixés respectivement sur la première molaire de l'arcade dentaire droite et sur la première molaire de l'arcade dentaire gauche,
- deux élastiques intra-oraux (6), où chaque élastique intra-oral a une première portion d'extrémité (60) en forme de « U » destinée à être disposée dans une concavité (2) de l'aligneur dentaire, autour de la crête (4), une seconde extrémité (61) en forme de « U » destinée à être disposée autour du crochet de fixation (7) et un segment (62), de forme rectiligne, qui passe sur la selle (3) de l'aligneur dentaire ;
- des fixations destinées à être positionnées sur les dents et aptes à être insérées à l'intérieur des poches (5).
